## Europäisches Patentamt
## European Patent Office
## Office européen des brevets

(19)

(11) Veröffentlichungsnummer: **0 004 559**
**B1**

(12) **EUROPÄISCHE PATENTSCHRIFT**

(45) Veröffentlichungstag der Patentschrift:
04.11.81

(51) Int. Cl.³: **G 06 K 19/08**, G 09 F 3/02,
G 03 H 1/00

(21) Anmeldenummer: 79100626.5

(22) Anmeldetag: 02.03.79

(54) **Ausweis mit einem Hologramm; Verfahren zur Herstellung des Ausweises und Vorrichtung zum Aufzeichnen des Hologramms auf den Ausweis.**

(30) Priorität: 23.03.78 DE 2812841

(43) Veröffentlichungstag der Anmeldung:
17.10.79 Patentblatt 79/21

(45) Bekanntmachung des Hinweises auf die Patenterteilung:
04.11.81 Patentblatt 81/44

(84) Benannte Vertragsstaaten:
BE CH FR GB IT LU NL SE

(56) Entgegenhaltungen:
DE-A-2 545 799
DE-A-2 558 056
DE-B-2 647 325
FR-A-2 296 150
FR-A-2 304 971
FR-A-2 345 770
US-A-3 152 901

(73) Patentinhaber: SIEMENS AKTIENGESELLSCHAFT Berlin und München, Postfach 22 02 61, D-8000 München 22 (DE)

(72) Erfinder: Flothmann, Detlev, Dipl.-Ing.,
Millöckerstrasse 28, D-8000 München 71 (DE)
Erfinder: Rüll, Hartwig, Balduin-Helm-Strasse 39,
D-8080 Fürstenfeldbruck (DE)
Erfinder: Stalmer, Angelika, Pläntchweg 62,
D-8000 München 60 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Ausweis mit einem Hologramm; Verfahren zur Herstellung des Ausweises
und Vorrichtung zum Aufzeichnen des Hologramms auf den Ausweis

Die Erfindung bezieht sich auf einen Ausweis nach dem Oberbegriff des Patentanspruchs 1, ein Verfahren zu seiner Herstellung nach dem Oberbegriff des Patentanspruchs 19 sowie auf eine Vorrichtung zum Aufzeichnen eines Hologramms auf den Ausweis.

Ein Ausweis der eingangs genannten Art ist aus der DE-AS 2 647 325 bekannt geworden. Bei diesem Ausweis enthält das auf der Aufzeichnungsschicht aufgezeichnete Hologramm eine Seite des die Information tragenden Objekts, d. h. des Ausweises, und die auf der gleichen Aufzeichnungsschicht aufgezeichnete weitere Information besteht ebenfalls aus einem Hologramm, das die andere Seite des Objekts enthält. Dadurch soll bei dem bekannten Ausweis die Sicherheit gegen Fälschungen gegenüber bekannten Ausweisen noch erhöht und die Veränderung von gespeicherten Daten auf dem Ausweis nahezu ausschließt.

Die Aufgabe der vorliegenden Erfindung besteht darin, aufzuzeigen, wie die Fälschungssicherheit eines Ausweises der eingangs genannten Art noch weiter erhöht werden kann.

Diese Aufgabe wird durch die im kennzeichnenden Teil des Patentanspruchs 1 angegebene Maßnahme gelöst.

Durch diese Maßnahme ist erreicht worden, daß das Hologramm und die nicht holografischen Ausweisinformationen untrennbar miteinander verbunden sind. Jeder Trennversuch führt bei einem solchen Ausweis zwangsläufig zu einem Artefakt.

Bevorzugte und vorteilhafte Ausführungsformen des vorgeschlagenen Ausweises gehen aus den Ansprüchen 2 bis 18 hervor.

Ein vorteilhaftes Verfahren zur Herstellung eines vorgeschlagenen Ausweises geht aus dem Anspruch 19 hervor, das von einem Verfahren ausgeht, die es beispielsweise aus der US-PS 3 152 901 oder der DE-OS 2 545 799 bekannt geworden ist.

Eine besonders zweckmäßige und vorteilhafte Vorrichtung zum Aufzeichnen eines Hologramms auf einen vorgeschlagenen Ausweis geht aus dem Anspruch 20 hervor. Diese Vorrichtung bildet den Schlüssel dafür, daß zum Aufzeichnen des Hologramms und der lesbaren Information eine einzige Vorrichtung benutzt werden kann.

Bevorzugte und vorteilhafte Ausführungsformen dieser Vorrichtung gehen aus den Ansprüchen 21 bis 25 hervor. Die Vorrichtung nach Anspruch 21 hat den Vorteil, daß mit ihr auch das Hologramm ausgelesen werden kann. Die Vorrichtung nach Anspruch 24 hat den Vorteil, daß mit ihr sowohl die lesbare Information als auch das Hologramm aufgezeichnet werden kann.

Ein besonderer Vorteil dieser genannten Vorrichtungen liegt noch darin, daß mit ihnen auch Lippmann-Bragg-Hologramme aufgenommen werden können.

Die Erfindung wird anhand eines Ausführungsbeispiels in der folgenden Beschreibung näher erläutert, in der auch noch weitere Vorteile der Erfindung angegeben sind. Zur Erläuterung dienen auch noch die Zeichnungen, von denen

Fig. 1 einen vorgeschlagenen Ausweis zeigt, der aus drei Schichten besteht und der teilweise zerlegt ist,

Fig. 2 in perspektivischer Darstellung einen vorgeschlagenen Ausweis und daneben den Hologramminhalt,

Fig. 3 in stark schematisierter Darstellung eine Vorrichtung zur Herstellung der nichtholografischen Ausweisinformation,

Fig. 4 eine noch ohne Hologramm versehene Vorform des Ausweises, welche zur Aufnahme des Hologramms präpariert ist,

Fig. 5 eine Anordnung, wie sie zur Aufnahme des Hologramms verwendet wird,

Fig. 6 eine andere Vorrichtung, wie sie zur Aufnahme des Hologramms verwendet wird und

Fig. 7 in schematischer Darstellung eine Auswertevorrichtung zeigen.

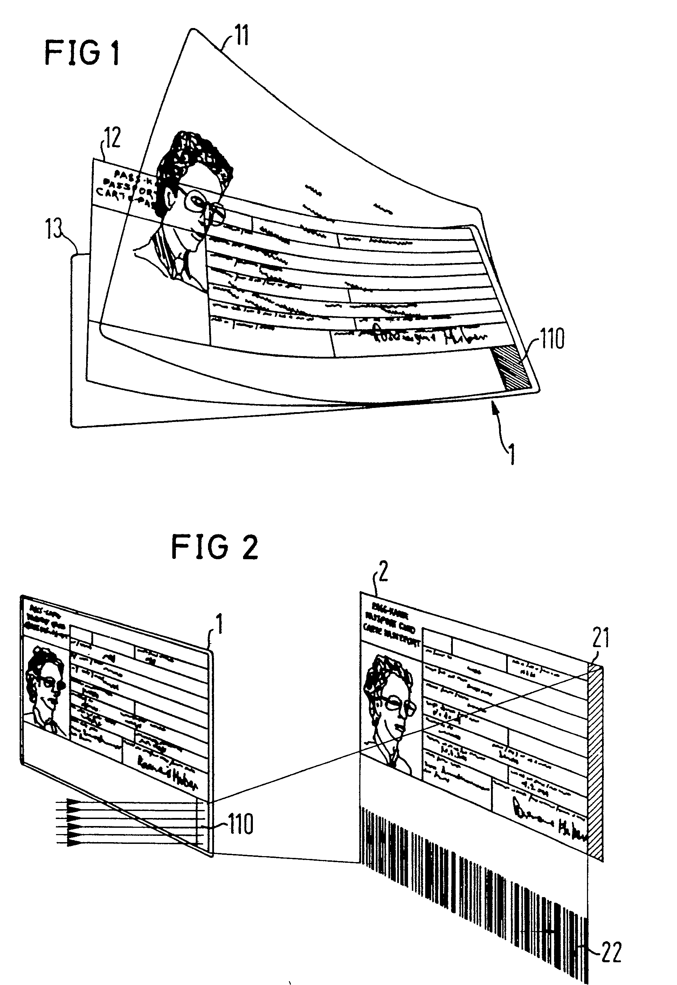

Nach der Fig. 1 besteht der Ausweis 1 aus drei Schichten 11, 12 und 13. Dabei ist die Schicht 11 ein entwickelter fotografischer Film, auf den das Hologramm und die nicht holografische Ausweisinformation aufgezeichnet sind. Dieser Film ist ein herkömmliches fotografisches Filmmaterial (beispielsweise Agfa RO 81 p, Kodak SO 299 oder Kodak SO 235) und besteht aus einer transparenten Trägerfolie, auf der eine fotoempfindliche Schicht aufgebracht ist. Diese fotoempfindliche Schicht bildet die gemeinsame Aufzeichnungsschicht. Auf dieser fotoempfindlichen Schicht sind das Hologramm und zugleich die nicht holografischen Ausweisinformationen, wie alphanumerische Angaben und reine Bildinformation, wie beispielsweise ein Paßbild, aufgezeichnet. Wesentlich ist, daß die fotografische Schicht, welche zum Aufzeichnen der Informationen dient, eine einheitlich mit einem Grundmaterial, beispielsweise Gelatine, gebildete Einzelschicht ist, denn dadurch sind holografische und nicht holografische Information ohne Mediengrenze echt untrennbar miteinander verbunden.

In der Fig. 1 befindet sich das Hologramm an der rechten unteren Ecke der Schicht 11 und ist mit 110 bezeichnet, während die nicht holografische Information über die ganze Ausweisfläche als Schrift und bildliche Darstellung verteilt ist. Das Hologramm kann aufgrund der echt untrennbaren Verbindung ohne Mediengrenze nicht mehr entfernt, beispielsweise ausgestanzt und durch ein anderes Hologramm ersetzt werden, ohne daß dies nicht festgestellt werden könnte.

Die fotografische Schicht befindet sich auf der Seite der Schicht 11, welche der Schicht 12 zugewandt ist, ist also beim Ausweis zwischen der Trägerfolie und der Schicht 12 angeordnet.

Die mittlere Schicht 12 besteht aus Papier und enthält das bei jedem Ausweis gleiche Gerüst, wie Feldeinteilung, Vordruck und herkömmliche Sicherungszeichen, wie Wasserzeichen oder Gioschen usw.

Die Schicht 13 dient ausschließlich als Deckschicht und ist vorzugsweise aus transparentem Material, beispielsweise transparentem Kunststoff, gefertigt.

Als Material für die Aufzeichnungsschicht, das in erster Linie vom Hologramm her zu bestimmen ist, können diverse lichtempfindliche Materialien verwendet werden. Für Zwecke der Ausweisabsicherung kommen insbesondere in Frage:
Hochauflösende Silberhalogenid-Emulsionen,
Fotopolymere und
Dichromatgelatine.

Die Aufzeichnungsschicht ist vorzugsweise nur einige Tausendstel Millimeter dick und wird vornehmlich auf einem Trägerfilm aus Triacetat oder Polyester aufgetragen.

Ein zur Ausweisabsicherung verwendetes Hologramm kann jegliche Information, also auch bildhafte Information (Portrait, Unterschrift, usw.),
schriftliche Information (alphanumerische Zeichen) oder
digitale Information (Codezeichen)
enthalten.

In einem Ausweishologramm können die Gesamtansicht des Ausweises, die Gesamtansicht und Codezeichen oder Teilausschnitte des Ausweises (z. B. nur Bild und Unterschrift) aufgezeichnet sein.

Die Fig. 2 zeigt den Ausweis 1 mit Hologramm 110 sowie den rekonstruierten Hologramminhalt 2, wie er bei einer Rekonstruktion mit Laserlicht auf einer Projektionsfläche sichtbar wird. Dieser Hologramminhalt enthält die vollständige Ansicht des Ausweises 1, der lediglich auf der rechten Seite einen abgedunkelten Streifen 21 aufweist, über den später noch zu reden sein wird und zusätzlich Information 22, die in maschinenlesbaren Codezeichen vercodet ist. Der Hologramminhalt 2 stellt eine beispielhafte, aber vom Standpunkt der Ausweissicherung her eine sehr vorteilhafte Möglichkeit dar.

Zur Ausweisabsicherung kommen zwei Hologrammarten in Frage, nämlich das Durchlichthologramm und das Weißlichthologramm. Das Durchlichthologramm wird mit kohärentem monochromatischem Licht aufgenommen und wiedergegeben. Es besitzt einen hohen Redundanzgrad und großes Auflösungsvermögen. Das Weißlichthologramm wird mit kohärentem Licht aufgenommen und wird sowohl mit Laser- als auch mit weißem Licht (z. B. Autoscheinwerfer, Sonne oder Taschenlampe) ausgewertet werden. So kann im Beispiel des Hologramminhaltes 2 der analoge Teil mit weißem Licht und der maschinenlesbare Teil mit Laserlicht ausgelesen werden.

Es können für die Hologramm Amplituden- oder Phasenhologramme verwendet werden. Die nicht holografische Information, also die Information, die unmittelbar von der Schicht ablesbar ist, kann auf verschiedenste Art und Weise auf die Schicht aus dem Aufzeichnungsmaterial aufgebracht werden. Beispielsweise kann sie mittels fotografischer Aufnahme aufgebracht, aufgedruckt und/oder aufgeschrieben werden.

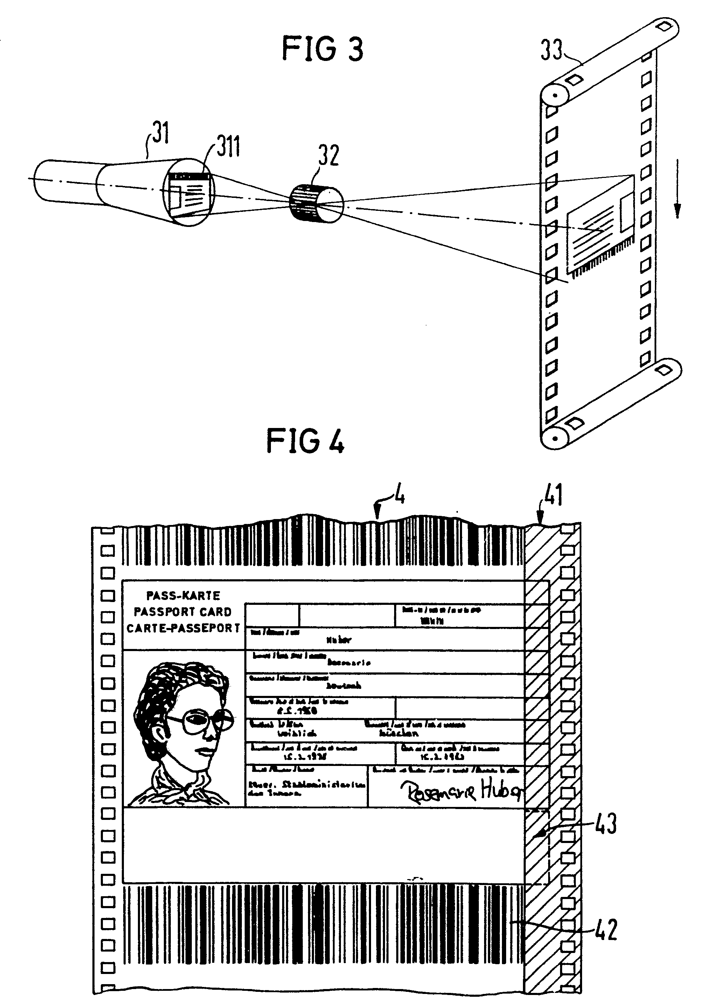

In der Fig. 3 ist in stark schematischer Darstellung eine Vorrichtung zur Herstellung der nicht holografischen Information dargestellt, mittels welcher diese Information fotografisch aufgenommen wird. Mittels einer Elektronenstrahlröhre 31 wird ein Bild 311 des Ausweises erzeugt, welches mittels einer abbildenden Optik 32 auf einen fotografischen Film 33 von 150 mm Breite abgebildet und der Film somit mit der Ausweisinformation belichtet wird. Das Ausweisbild enthält sämtliche Daten inklusive Paßbild und Unterschrift. Zudem können persönliche uns sonstige Daten in maschinenlesbarer Form (siehe Fig. 2, Position 22) auf den Film gebracht werden. Dieser maschinenlesbare Codestreifen liegt außerhalb des eigentlichen Ausweisfeldes und ist nicht Bestandteil des späteren Ausweises sondern höchstens Teil des Hologramminhaltes (siehe Fig. 2).

Der Film wird entwickelt und die entwickelten Bilder können zum Ausweis weiterverarbeitet werden.

Zur Hologrammerzeugung muß der entwickelte Film noch einmal sensibilisiert werden. Im vorliegenden Fall geschieht dies durch Dichromatisierung. Dazu wird die Gelatine des Films einer Dichromatflüssigkeit ausgesetzt. Dies braucht aber nur dort zu geschehen, wo das Hologramm tatsächlich aufgezeichnet werden soll. Zweckmäßigerweise wird nur ein Streifen entlang eines Randes des Films dichromatisiert. In der Fig. 4 ist ein Ausschnitt eines vollständig entwickelten und durch Dichromatisierung für die Hologrammaufnahme erneut sensibilisierten Filmes 4 dargestellt. Der Film enthält neben der Information im Klarbild noch Information in einem maschinenlesbaren Kode, welche durch die Streifenstruktur 42 gegeben ist. Am rechten Rand ist der Film im schraffierten Bereich 41 dichromatisiert und somit für die Aufnahme des Hologramms, welches im gestrichelt umrahmten Aufzeichnungsfeld 43 später entstehen soll, sensibilisiert.

Im gestrichelt umrahmten Feld 43 wird nun das Hologramm aufgezeichnet.

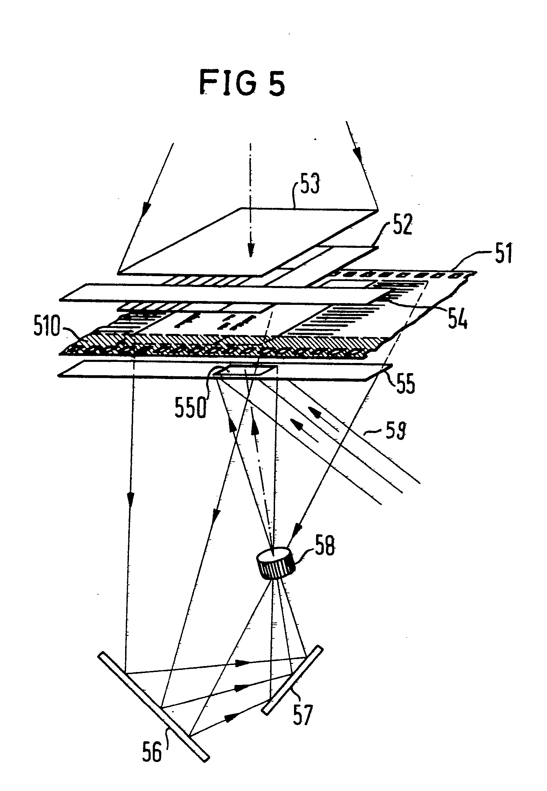

In der Fig. 5 ist eine Anordnung zur Aufnahme des Hologramms dargestellt. Dabei wird als Objekt der Ausweis im Klarbild und Information in maschinenlesbarer Darstellung verwendet. Die Aufzeichnung geschieht so, daß über der Ausweisinformation im Klarbild und den maschinenlesbaren Teil des Films 51 eine transparente Platte 52 mit Hintergrundinformation und über dieser wiederum ein Diffusor 53 angeordnet ist. Der Diffusor wird von oben mit Laserlicht beleuchtet, wodurch die Ausweisinformation zusammen mit der Hintergrundinformation von unten her auf den Film als klares Bild in Erscheinung tritt. Der sensibilisierte Streifen 510, der schraffiert dargestellt ist, wird mittels einer Deckblende 54 abgedeckt, so daß er nicht belichtet werden kann. Mit einer zweiten Deckblende 55 wird der Streifen 510 auch von unten her abgedeckt. Dieser Streifen 55 weist eine Aussparung 550 auf, welche an die Stelle gebracht wird, wo das Hologramm auf dem Streifen 510 entstehen soll. Das auf der Unterseite des Films sichtbare Bild wird mittels einer abbildenden Optik 58 verkleinert reell abgebildet und das verkleinerte reelle Bild wird als Objekt zur Hologrammaufnahme verwendet. Um das vom Ausweisbild herkommende Licht wieder auf die Ausweisfolie zu lenken, sind Spiegel 56 und 57 angebracht. Durch die Überlagerung der vom Film ausgehenden Lichtwellen (entspricht der Objektwelle) mit einer Referenzwelle 59 entsteht das Hologramm im ausgesparten Teil 550 auf dem Streifen 510. Der so belichtete Film wird noch einmal entwickelt und nach dem Trocknen können die einzelnen Ausweisfelder zusammen mit dem Hologramm herausgestanzt und zu einem fälschungs- und verfälschungssicheren Ausweis verarbeitet werden.

Da als Objekt die Schicht 11 (Fig. 1), die ja bis auf die alphanumerischen Zeichen und das Portrait glasklar transparent ist, für die holografische Aufnahme verwendet wird, wird eine sehr gute Bildqualität bei der Wiedergabe des Hologramms erhalten.

Vorzugsweise wird die holografische Information in der Tiefe der Schicht als Volumen-Phasenhologramm gespeichert.

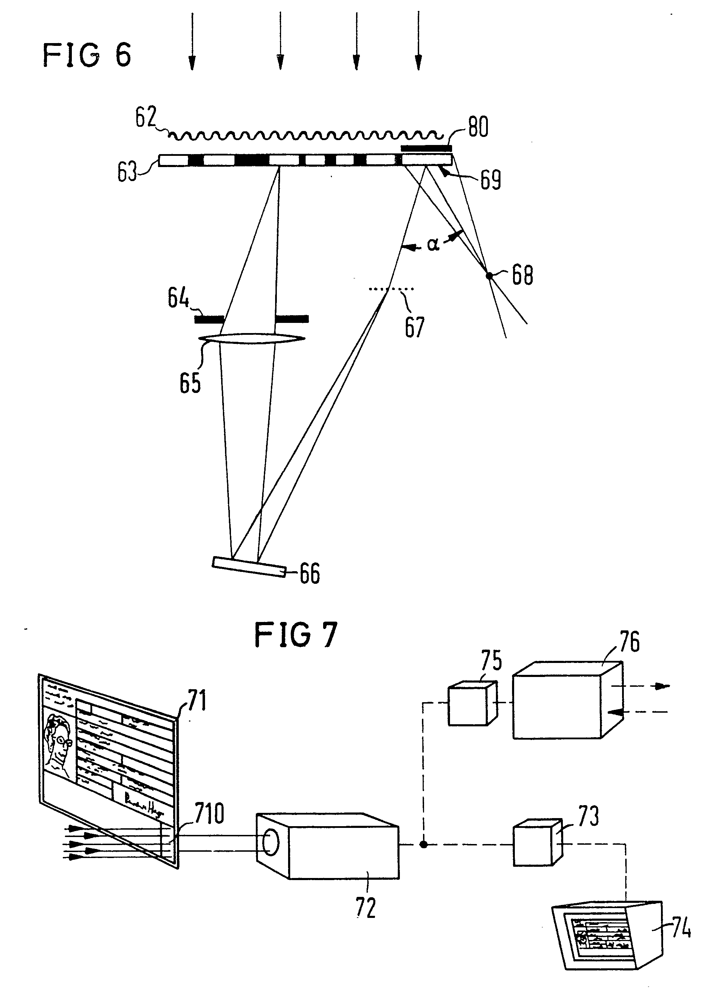

In der Fig. 6 ist noch einmal eine Vorrichtung entsprechend der Fig. 5 in stark schematisierter Form dargestellt. Bei dieser Anordnung sind die abbildende Optik 65, die aus einer Linse besteht, und der Spiegel 66 anders angeordnet, als bei der Anordnung nach Fig. 5, was aber nicht von Bedeutung ist, da wie dort ein verkleinertes reelles Bild 67 der Ausweisinformation vor dem Film erzeugt wird, welches als Objekt für die holografische Aufnahme verwendet wird.

In der Fig. 6 ist der Diffusor mit 62, der fotografische Film mit 63 und die obere Abdeckblende mit 80 bezeichnet. Belichtet wird hier ebenfalls von oben her. Mit der in der Fig. 6 dargestellten Anordnung läßt sich das Hologramm im Durchlicht wahlweise mit Laserlicht oder auch mit weißem Licht (Taschenlampe, Sonne) auslesen. Dazu werden folgende Randbedingungen eingehalten: Das streuende Medium 62 ist ein reines Phasenobjekt mit einer Struktur, die gerade noch von der Linse 65, der eine Spaltblende 64 vorgesetzt ist, aufgelöst wird. Dadurch wird bei der Wiedergabe ein nahezu granulationsfreies Bild erhalten. Die Quelle 68 der Referenzwelle und das reelle Bild 67 liegen auf einem Kreisbogen mit Mittelpunkt in der Hologrammitte auf dem sensibilisierten Hologrammfeld 69 des Films 63. Dadurch wird erreicht, daß der Ausweis zum Auslesen des Hologramms seitlich und in der Höhe nicht genau justiert zu werden braucht. Der Winkel zwischen dem reellen Bild 67, der Hologrammitte und der Punktlichtquelle soll möglichst groß gemacht werden. Dadurch wird eine deutliche Farbtrennung beim Auslesen erreicht.

Bei der Aufnahme können Objekt- und Referenzwellen anstatt divergent auch konvergent sein.

Für das Auslesen im weißen Licht ist besonders die Spaltblende 64 wichtig. Beim Auslesen mit weißem Licht wird so vorgegangen, daß das Hologramm von der Rückseite mit weißem Licht durchstrahlt wird. Dadurch wird das verkleinerte reelle Bild des Ausweises im Raum rekonstruiert, aber zugleich auch ein reelles Bild des Spaltes 64. Für verschiedene Farben erscheinen die reellen Bilder unter verschiedenen Winkeln zur Hologrammebene. Bringt man das Auge an ein reelles Spaltbild, so kann man durch den Spalt das reelle verkleinerte Bild des Ausweises in einer bestimmten Farbe beobachten.

Beim Auslesen mit Laserlicht kann man auf zwei Wegen vorgehen. Die Wiedergabewelle wird identisch der Referenzwelle gewählt. Auf der von der Lichtquelle der Wiedergabewelle abgewandten Seite des Hologramms wird eine Linse so angeordnet, daß sie sich in dem über das Hologramm hinaus fortgesetzt gedachten Strahlengang der Objektwelle befindet. Hinter dieser Linse wird dann bei der Wiedergabe ein reelles Bild des Ausweises erzeugt. Bei der anderen Möglichkeit breitet sich die Wiedergabewelle entgegengesetzt zur Referenzwelle aus, ist aber sonst mit dieser identisch. Hier wird das verkleinerte reelle Bild an der ursprünglichen Stelle rekonstruiert (vorausgesetzt die Wellenlänge der Wiedergabewelle ist gleich der Wellenlänge der Referenzwelle).

Mit den Anordnungen nach Fig. 5 und 6 können auch Lippmann-Bragg-Hologramme aufgenommen werden. Bei der Aufnahme solcher Hologramme befinden sich Objekt- und Referenzlichtquelle nicht auf der gleichen Seite des Hologramms. In diesem Fall muß also Licht auch von der anderen Seite her in das Hologramm eintreten können. Da diese Seite bei den bisher beschriebenen Anordnungen durch die Deckblenden 54 bzw. 80 vollständig abgedeckt ist, muß hier ein Lichtzutritt geschaffen werden. Dies geschieht vorteilhafterweise so, daß die Deckblenden 54 bzw. 80 durch einen entsprechend geformten Spiegel ersetzt werden, welcher zur Filmebene geneigt angeordnet ist. Dieser Spiegel muß lichtundurchlässig sein. Mit so einem Spiegel kann erreicht werden, daß der sensibilisierte Streifen nach wie vor von schädlichem Licht, welches von oben her kommt, geschützt ist, daß aber der Streifen dennoch von beiden Seiten her belichtet werden kann. Bei den Anordnungen nach Fig. 5 oder 6 belichtet beispielsweise die Referenzlichtquelle den Spiegel und dieser lenkt das Licht in Richtung Hologramm. In der Fig. 7 ist schematisch eine Auswertevorrichtung zur Auswertung des Hologramminhaltes dargestellt. Es sei dabei angenommen, daß das Hologramm den gleichen Inhalt aufweist, wie er in der Fig. 2 dargestellt ist (der dortige Streifen 21 entspricht dem Streifen 41 in Fig. 4 bzw. dem Streifen 510 in der Fig. 5). Nach Fig. 7 wird das Hologramm 710 eines Ausweises 71 mittels Laserlicht rekonstruiert. Das rekonstruierte Bild wird von einem Vidikon 72 in elektrische Signale umgewandelt. Die vom Vidikon gelieferten elektrischen Signale werden nun aufgeteilt, und zwar werden die Signale, welche dem Klarbild des Ausweises entsprechen, über eine Monitorelektronik 73 einem Monitor 74 zugeführt, während die Signale, welche der maschinenlesbaren Information entsprechen, über eine Anpaß- und Auswerteelektronik 75 einem Terminal-Prozessor 76 zur weiteren Verarbeitung zugeführt werden. Auf dem Bildschirm des Monitors 74 kann das Klarbild des Ausweises visuell kontrolliert werden.

**Patentansprüche**

1. Ausweis, der eine lesbare Information und mindestens ein die lesbare Information beinhaltendes Hologramm aufweist, wobei das Hologramm neben einer weiteren Information auf einer gemeinsamen Aufzeichnungsschicht aufgezeichnet ist, dadurch gekennzeichnet, daß als weitere Information die lesbare Information auf der gemeinsamen Aufzeichnungsschicht aufgezeichnet ist.

2. Ausweis nach Anspruch 1, dadurch gekennzeichnet, daß sich das Aufzeichnungsfeld für die lesbare Information über die ganze Ausweisfläche erstreckt.

3. Ausweis nach Anspruch 1 oder 2, dadurch gekennzeichnet, daß die lesbare Information im Klarbild auf der gemeinsamen Aufzeichnungsschicht aufgezeichnet ist.

4. Ausweis nach einem der vorhergehenden Ansprüche, dadurch gekennzeichnet, daß die Gesamtansicht des Ausweises im Hologramm gespeichert ist.

5. Ausweis nach einem der vorhergehenden Ansprüche, dadurch gekennzeichnet, daß maschinenlesbar vercodete Information im Hologramm abgespeichert ist.

6. Ausweis nach einem der vorhergehenden Ansprüche, dadurch gekennzeichnet, daß im Hologramm mehrere Informationen verschiedener Art übereinander unter jeweils anderen Ein- bzw. Auslesewinkeln und/oder verschiedenen Wellenlängen abgespeichert sind.

7. Ausweis nach einem der vorhergehenden Ansprüche, dadurch gekennzeichnet, daß das Hologramm ein Durchlichthologramm ist.

8. Ausweis nach einem der vorhergehenden Ansprüche, dadurch gekennzeichnet, daß das Hologramm ein Weißlichthologramm ist.

9. Ausweis nach einem der vorhergehenden Ansprüche, dadurch gekennzeichnet, daß die Aufzeichnungsschicht auf einer Trägerschicht aufgebracht ist.

10. Ausweis nach Anspruch 9, dadurch gekennzeichnet, daß die Trägerschicht eine transparente Schicht ist.

11. Ausweis nach Anspruch 10, dadurch gekennzeichnet, daß die Trägerschicht aus Triacetat oder Polyester besteht.

12. Ausweis nach einem der vorhergehenden Ansprüche, dadurch gekennzeichnet, daß die Aufzeichnungsschicht eine fotografische Schicht ist.

13. Ausweis nach Anspruch 12, dadurch gekennzeichnet, daß die Aufzeichnungsschicht flächenhaft mit einer undurchsichtigen Schicht verbunden ist.

14. Ausweis nach Anspruch 13, dadurch gekennzeichnet, daß auf der undurchsichtigen Schicht Hintergrundinformationen und/oder eine Feldeinteilung und/oder Sicherungszeichen aufgezeichnet sind.

15. Ausweis nach Anspruch 13 oder 14, dadurch gekennzeichnet, daß die undurchsichtige Schicht aus Papier ist.

16. Ausweis nach Anspruch 15, dadurch gekennzeichnet, daß die Schicht aus Papier zusätzlich flächenhaft mit einer Deckschicht verbunden ist.

17. Ausweis nach einem der Ansprüche 12 bis 16, dadurch gekennzeichnet, daß das aufgezeichnete Hologramm ein Volumen-Phasenhologramm ist.

18. Ausweis nach einem der Ansprüche 12 bis 17, dadurch gekennzeichnet, daß die fotografische Schicht aus einer Silberhalogenid-Emulsion aus einem Fotopolymer oder aus Dichromatgelatine besteht.

19. Verfahren zur Herstellung eines Ausweises nach einem der Ansprüche 12 bis 18, bei dem auf dem die gemeinsame Aufzeichnungsschicht bildenden fotografischen Material das Hologramm und die lesbare Information nacheinander aufgezeichnet werden, dadurch gekennzeichnet, daß das fotografische Material zunächst mit der lesbaren Information belichtet wird, daß danach entwickelt wird, daß nach dem Entwickeln das Material an einer Stelle, wo das Hologramm aufgezeichnet werden soll, durch zeitweiliges Aufbringen einer Dichromatflüssigkeit sensibilisiert wird, daß danach dem Hologramm entsprechend belichtet wird, und daß danach erneut entwickelt wird.

20. Vorrichtung zum Aufzeichnen eines Hologramms auf einen Ausweis nach einem der Ansprüche 12 bis 18, dadurch gekennzeichnet, daß eine abbildende Optik (58, 65) zum verkleinerten reellen Abbilden der Gesamtansicht des Ausweises und Spiegels (56, 57; 66) zum Umlenken des Abbildungsstrahlenganges in Richtung auf das für das Hologramm vorgesehene Aufzeichnungsfeld (43) vorgesehen sind, wobei das reelle verkleinerte Bild in einem Abstand von dem fotografischen Material (63) sich befindet und daß eine Lichtquelle zum Erzeugen einer Referenzwelle, welche das Aufzeichnungsfeld (43) trifft, vorhanden ist.

21. Vorrichtung nach Anspruch 20, dadurch gekennzeichnet, daß zwischen dem fotografischen Material (63) und der abbildenden Optik (65) eine Spaltblende (64) angeordnet ist.

22. Vorrichtung nach Anspruch 20 oder 21, dadurch gekennzeichnet, daß die Lichtquelle und das verkleinerte reelle Bild im selben Abstand von dem Aufzeichnungsfeld (43) für das Hologramm angeordnet sind.

23. Vorrichtung nach einem der Ansprüche 20 bis 22, dadurch gekennzeichnet, daß der Winkel zwischen der Richtung, die von der Lichtquelle zum verkleinerten reellen Bild und der Richtung, die von Lichtquelle zum Aufzeichnungsfeld (43) zeigt, größer als 30° ist.

24. Vorrichtung nach einem der Ansprüche 20 bis 23, dadurch gekennzeichnet, daß auf der von der abbildenden Optik (58; 65) abgewandten Fläche des fotografischen Materials eine Lichtquelle zum Erzeugen kohärenten Lichtes, zwischen dieser Lichtquelle und dem fotografischen Material ein Diffusor (53) und zwischen dem Diffusor und dem Aufzeichnungsfeld (43) eine Abdeckblende (54) angeordnet sind.

25. Vorrichtung nach Anspruch 24, dadurch gekennzeichnet, daß die Abdeckblende (54) aus einem undurchlässigen Spiegel besteht, dessen Spiegelfläche dem fotografischen Material zugewandt ist und der bezüglich letzterer geneigt angeordnet ist.

## Claims

1. An identity card which displays a legible piece of information and at least one hologram which contains said piece of information, wherein the hologram, in addition to a further piece of information, is recorded on a common recording layer, characterised in that, as further information, the piece of legible information is recorded on the common recording layer.

2. An identity card as claimed in Claim 1, characterised in that the recording field for the legible piece of information extends over the entire surface of the identity card.

3. An identity card as claimed in Claim 1 or Claim 2, characterised in that the legible piece of information is recorded on the common recording layer in clear.

4. An identity card as claimed in any preceding Claim, characterised in that an overall view of the identity card is stored in the hologram.

5. An identity card as claimed in any preceding Claim, characterised in that information coded in a machine readable fashion is stored in the hologram.

6. An identity card as claimed in any preceding Claim, characterised in that in the hologram, there are stored in superimposed manner a plurality of items of information of mutually different type using respective mutually different read-in and read-out angles and/or respective mutually different wavelengths.

7. An identity card as claimed in any preceding Claim, characterised in that the hologram is a transmitted light hologram.

8. An identity card as claimed in any preceding Claim, characterised in that the hologram is a white light hologram.

9. An identity card as claimed in any preceding Claim, characterised in that the recording layer is applied to a carrier layer.

10. An identity card as claimed in Claim 9, characterised in that the carrier layer is a transparent layer.

11. An identity card as claimed in Claim 10, characterised in that the carrier layer consists of a triacetate or polyester.

12. An identity card as claimed in any preceding Claim, characterised in that the recording layer is a photographic layer.

13. An identity card as claimed in Claim 12, characterised in that an area of the recording layer is secured to a non-transparent layer.

14. An identity card as claimed in Claim 13, characterised in that the non-transparent layer has entered thereon items of background information and/or a field division and/or safety-checking marks.

15. An identity card as claimed in Claim 13 or 14, characterised in that the non-transparent layer is made of paper.

16. An identity card as claimed in Claim 15, characterised in that the layer made of paper has an area secured to a top layer.

17. An identity card as claimed in any one of Claims 12 to 16, characterised in that the recorded hologram is a volume-phase hologram.

18. An identity card as claimed in any one of Claims 12 to 17, characterised in that the photographic layer consists of a silver-halogenide emulsion made of a photopolymer or of dichromate gelatine.

19. A method of manufacturing an identity card as claimed in any one of Claims 12 to 18, wherein the photographic material, which forms the common recording layer, has successively recorded thereon the hologram and the legible information, characterised in that the photographic material is firstly exposed to the legible information, and subsequently processed, after which the material is sensitized by temporarily applying a dichromate liquid at a point where the hologram is to be recorded, and that a subsequent exposure is effected to form the hologram, after which re-processing takes place.

20. A divice for recording a hologram on an identity card as claimed in one of the Claims 12 to 18, characterised in that there are provided a focussing lens (58; 65) which serves to form a reduced real image of the overall view of the identity card, and reflectors (56, 57, 66) which serve to deflect the path of the focussed beam to the recording field (43) provided for the hologram, where the real reduced image is spaced from the photographic material (63) and that a light source is provided for producing a reference wave incident upon the recording field (43).

21. A device as claimed in Claim 20, characterised in that a slit diaphragm (64) is arranged between the photographic material (63) and the focussing lens (65).

22. A device as claimed in Claim 20 or Claim 21, characterised in that the light source and the reduced real image are equidistantly spaced from the recording field (43) for the hologram.

23. A device as claimed in any one of Claims 20 to 22, characterised in that the angle between the path direction from the light source to the reduced real image and the path direction from the light source to the recording field (43) is greater than 30°.

24. A device as claimed in any one of Claims 20 to 23, characterised in that on the surface of the photographic material used by the focussing lens (58, 65), there is arranged a light source for producing coherent light, between this light source and the photographic material there is arranged a diffusor (53), and between the diffusor and the recording field (43) there is arranged a masking diaphragm (54).

25. A device as claimed in Claim 24, characterised in that the masking diaphragm (54) consists of an impervious reflector whose reflecting surface faces the photographic material and which is arranged in tilted fashion in respect of the reflecting surface.

**Revendications**

1. Carte d'identité, qui présente une information lisible et au moins un hologramme contenant l'information lisible, l'hologramme étant enregistré à côté d'une autre information sur une couche d'enregistrement commune, caractérisée en ce que l'autre information, qui est enregistrée sur la couche d'enregistrement commune, est l'information lisible.

2. Carte d'identité suivant la revendication 1, caractérisée en ce que la région d'enregistrement pour l'information lisible s'étend sur toute la surface de la carte d'identité.

3. Carte d'identité suivant la revendication 1 ou 2, caractérisée en ce que l'information lisible est enregistrée en clair sur la couche commune d'enregistrement.

4. Carte d'identité suivant l'une des revendications précédentes, caractérisée en ce que tout ce qui figure sur la carte d'identité est contenu dans l'hologramme.

5. Carte d'identité suivant l'une des revendications précédentes, caractérisée en ce que de l'information codée, lisible à la machine, est contenue dans l'hologramme.

6. Carte d'identité suivant l'une des revendications précédentes, caractérisée en ce que dans l'hologramme sont superposées plusieurs informations de types différents ayant leur propre angle d'enregistrement et de restitution et/ou des longueurs d'onde différentes.

7. Carte d'identité suivant l'une des revendications précédentes, caractérisée en ce que l'hologramme est un hologramme en transparence.

8. Carte d'identité suivant l'une des revendications précédentes, caractérisée en ce que l'hologramme est un hologramme en lumière blanche.

9. Carte d'identité suivant l'une des revendications précédentes, caractérisée en ce que la couche d'enregistrement est placée sur une couche-support.

10. Carte d'identité suivant la revendication 9, caractérisée en ce que la couche-support est une couche transparente.

11. Carte d'identité suivant la revendication 10, caractérisée en ce que la couche-support est en triacétate ou en polyester.

12. Carte d'identité suivant l'une des revendications précédentes, caractérisée en ce que la couche d'enregistrement est une couche photographique.

13. Carte d'identité suivant la revendication 12, caractérisée en ce qu'une face de la couche d'enregistrement est reliée à une couche opaque.

14. Carte d'identité suivant la revendication 13, caractérisée par des informations en arrière-plan et/ou une graduation de champ, et/ou des signes de sécurité enregistrés sur la couche opaque.

15. Carte d'identité suivant la revendication 13 ou 14, caractérisée en ce que la couche opaque est en papier.

16. Carte d'identité suivant la revendication 15, caractérisée en ce qu'une face de la couche de papier est reliée à une face d'une couche de couverture.

17. Carte d'identité suivant l'une des revendications 12 à 16, caractérisée en ce que l'hologramme enregistré est un hologramme en volume et en phases.

18. Carte d'identité suivant l'une des revendications 12 à 17, caractérisée en ce que la couche photographique est en une émulsion d'halogénure d'argent en un photopolymère ou en gélatine au dichromate.

19. Procédé de fabrication d'une carte d'identité suivant l'une des revendications 12 à 18, par enregistrements successifs de l'hologramme et de l'information lisible sur la surface photographique formant la couche commune d'enregistrement, caractérisé en ce qu'il consiste à former d'abord l'image de l'information lisible sur la couche photographique, puis à la développer et, après le développement, à sensibiliser la surface photographique en un endroit où l'hologramme doit être enregistré par apport temporaire d'un liquide au dichromate, puis à exposer conformément à l'hologramme, et à développer à nouveau ensuite.

20. Montage d'enregistrement d'un hologramme sur une carte d'identité suivant l'une des revendications 12 à 18, caractérisé par une optique (58; 65) de formation de l'image pour former une image réelle réduite de l'ensemble de la carte d'identité, et par un miroir (56, 57; 66) pour dévier le trajet du faisceau de formation de l'image dans la direction du champ (43) d'enregistrement prévu pour l'hologramme, l'image réelle réduite se trouvant à une certaine distance de la surface (63) photographique, et il y a une source lumineuse destinée à l'obtention d'une onde de référence coupant le champ (43) d'enregistrement.

21. Montage suivant la revendication 20, caractérisé par un diaphragme (64) à fente interposé entre la surface (63) photographique et l'optique (65) de formation de l'image.

22. Montage suivant la revendication 20 ou 21, caractérisé en ce que la source lumineuse et l'image réelle réduite sont disposées à la même distance du champ (43) d'enregistrement pour l'hologramme.

23. Montage suivant l'une des revendications 20 à 22, caractérisé en ce que l'angle compris entre la direction allant de la source lumineuse à l'image réelle réduite et la direction allant de la source lumineuse au champ (43) d'enregistrement est supérieur à 30°.

24. Montage suivant l'une des revendications 20 à 23, caractérisé par une source lumineuse destinée à envoyer de la lumière cohérente sur la face de la surface photographique du côté opposé de l'optique (58; 65) de formation d'image, par un diffuseur (53) interposé entre cette source lumineuse et la surface photographique, et par un cache (54) interposé entre le diffuseur et le champ (43) d'enregistrement.

25. Montage suivant la revendication 24, caractérisé en ce que le cache (54) est constitué par un miroir opaque, dont la face formant miroir est tournée vers la surface photographique et qui est incliné par rapport à cette dernière.

# FIG 1

# FIG 2

## FIG 3

## FIG 4

PASS-KARTE
PASSPORT CARD
CARTE-PASSEPORT

# FIG 5

FIG 6

FIG 7